Europäisches Patentamt

European Patent Office

Office européen des brevets

(11) Publication number: **0 383 933 B1**

# EUROPEAN PATENT SPECIFICATION

(45) Date of publication of patent specification: **07.06.95**  (51) Int. Cl.[6]: **C03C  14/00**

(21) Application number: **89908505.4**

(22) Date of filing: **21.07.89**

(86) International application number:
**PCT/JP89/00735**

(87) International publication number:
**WO 90/01020 (08.02.90 90/04)**

(54) **CERAMIC COMPOSITE MATERIAL AND PROCESS FOR ITS PRODUCTION.**

(30) Priority: **21.07.88 JP 182715/88**
**01.08.88 JP 192421/88**
**29.08.88 JP 214619/88**
**28.10.88 JP 272375/88**

(43) Date of publication of application:
**29.08.90 Bulletin  90/35**

(45) Publication of the grant of the patent:
**07.06.95 Bulletin  95/23**

(84) Designated Contracting States:
**DE FR GB**

(56) References cited:
**JP-A-59 182 249**
**JP-A-62 187 142**
**US-A- 3 575 789**
**US-A- 4 588 699**
**US-A- 4 664 731**

(73) Proprietor: **JAPAN FINE CERAMICS CENTER**
**4-1, Mutsuno 2-chome, Atsuta-ku, Nagoya-**
**shi**
**Aichi 456 (JP)**

Proprietor: **SUMITOMO ELECTRIC INDUS-**
**TRIES, LTD.**
**5-33, Kitahama 4-chome,**
**Chuo-ku**
**Osaka-shi,**
**Osaka 541 (JP)**

(72) Inventor: **UCHIDA, Kiyoshi**
**Japan Fine Ceramics Center**
**4-1, Mutsuno 2-chome**
**Atsuta-ku**
**Nagoya-shi**
**Aichi 456 (JP)**
Inventor: **SHIMOKAWA, Ikuo**
**Japan Fine Ceramics Center**
**4-1, Mutsuno 2-chome**
**Atsuta-ku, Nagoya-shi**
**Aichi 456 (JP)**

GLASTECHNISCHE BERICHTE, vol. 61, no. 5, May 1988, pages 143-148, Frankfurt a/M, DE; E. ROEDER et al.: "Manufacture of glass composites reinforced with longand short fibres by extrusion"

Inventor: **NOMURA, Hiroshi**
**Japan Fine Ceramics Center**
**4-1, Mutsuno 2-chome**
**Atsuta-ku, Nagoya-shi**
**Aichi 456 (JP)**
Inventor: **NAKATA, Hirohiko Itami Works of**
**Sumitomo**
**Electric Industries, Ltd.**
**1-1, Koyakita 1-chome**
**Itami-shi**
**Hyogo 664 (JP)**
Inventor: **MIYAKE, Masaya Itami Works of**
**Sumitomo**
**Electric Industries, Ltd.**
**1-1, Koyakita 1-chome**
**Itami-shi**
**Hyogo 664 (JP)**

(74) Representative: **Herrmann-Trentepohl, Wer-**
**ner, Dipl.-Ing.**
**Patentanwälte Herrmann-Trentepohl,**
**Kirschner, Grosse, Bockhorni & Partner**
**Forstenrieder Allee 59**
**D-81476 München (DE)**

**Description**

Technical Field

The present invention relates to a ceramics composite material and a method of producing the same, and more particularly, it relates to a ceramics composite material containing crystallized glass as the matrix and fibers or whiskers of ceramics as the reinforcement. Background Art

JP-A-62 187 142 discloses a composite materialfor organisms capable of beeing chemically combined with bones prepared by adding 1 - 70 Vol.% reinforcing material to crystallized glass wherein the composite material has a flexural strength of not less than about 3000kg/cm$^2$. The used glass may comprise fibers containing oxygen.

US 4,588,699 discloses a high strenght thermally stable magensium aluminosilicate glass-cermaic matrix-SiC fiber composite. The matrix material contains about 5% to 14% magnesium oxide and about 5% to 25% barium oxide.

There has been proposed a composite material of ceramics whose matrix is reinforced by dispersing carbon fibers or fibers or whiskers of ceramics such as silicon carbide in granular matrices of high melting point ceramics such as alumina, zirconia or the like and thereafter sintering these granular matrices at a high temperature (refer to "Ceramics" issued by Yogyo Kyokai, 22(1987) No. 6).

As a method of producing these conventional ceramics composite materials, it has been general to employ ceramics powder as a raw matrix material, mechanically mix this powder with fibers or whiskers of ceramics by a ball mill or the like, and thereafter sinter the same.

When the raw material is thus prepared from ceramics powder, however, it is impossible to sufficiently fill up clearances between the fibers or whiskers of ceramics with the ceramics powder even by mechanical mixing as the content of the fibers or whiskers of ceramics is increased, wherefore a sufficiently dense sintered body cannot be obtained by sintering these, and hence it has been impossible to obtain a satisfactory characteristic such as mechanical strength. Further, mechanical mixing has caused damage and scission of the fibers or whiskers of ceramics.

Further, since it is not easy to homogeneously disperse the reinforcement in ceramics powder as hereinabove described, the employable reinforcement has been restricted to short fibers or whiskers of ceramics. However, the short fibers and whiskers are short in fiber lengths, and hence energy dispersion against external stress is localized. Thus, it has been impossible to sufficiently make the best use of the high strength characteristic provided in the mixed reinforcement, while no much characteristic improvement has been attained even if compounding was performed.

On the other hand, there has been studied a method of adhering ceramics for serving as the matrix to fibers or whiskers of ceramics for serving as the reinforcement by a CVD process or impregnating the fibers or whiskers into a slurry of ceramics for serving as the matrix and thereafter sintering the same. However, it has been impossible to sufficiently fill up clearances between the fibers or whiskers with the matrix material in the CVD process. Further, the method of making impregnation in the slurry state has such a disadvantage that moisture etc. contained in the slurry evaporates/volatilizes in sintering to reduce solid residues after sintering, thereby easily causing pores.

Thus, in compounding of the matrix material and the reinforcement, densification of the composite material is made difficult as the content of the reinforcement is increased, and hence the content of the reinforcement has generally remained at 15 to 20 volume percent, and 30 volume percent at the most. Accordingly, it has been difficult to obtain a ceramics composite material which is dense and excellent in characteristics such as strength, toughness and the like.

In order to efficiently obtain a machine part such as an engine part or the like through use of such a ceramics composite material, further, a technique is required for forming the same into a desired configuration.

However, since ceramics powder has been employed as a raw matrix material in the conventional forming method, a sintering process is necessarily required similarly to the case of obtaining general ceramics. Further, it has been impossible to use a sintering method at atmospheric pressure since fibers or whiskers of ceramics introduced as the reinforcement prevent densification of the sintered body.

In general, an attempt has been made for a method of forming a mixture obtained by mixing ceramics powder serving as the raw matrix material and fibers or whiskers of ceramics serving as the reinforcement with a mechanical press and sintering the same by hot pressing or the like ("FC Report" issued by Shadan Hojin Nippon Fine Ceramics Kyokai, Vol. 4(1986) No. 6, for example). Therefore, it has barely been possible to obtain a mere simple configuration such as a plate-type or pole-type one. In order to obtain a configuration of a target engine part or the like, for example, it is necessary to cut a portion of a certain configuration from a composite material compact having a simple configuration and finish the same to the final configuration through a step such as grinding with a diamond grindstone or the like. Therefore, an extremely high cost has been required for obtaining the final configuration of the engine part or the like, to hinder wide employment of the ceramics composite material.

Accordingly, an object of the present invention is to provide a ceramics composite material which is excellent in mechanical characteristics such as strength and toughness, and is hence highly reliable.

Another object of the present invention is to provide a method of producing a ceramics composite material which is dense and capable of increasing the content of the reinforcement prepared from fibers or whiskers of ceramics, in order to attain high mechanical characteristics.

Still another object of the present invention is to provide a method of forming a ceramics composite material which is capable of providing a relatively complicated configuration.

Disclosure of Invention

The object is achieved with a ceramics composite material according to claim 1 and a method of producing a ceramics composite material according to claim 2. Preferred embodiments are characterized in the subclaims.

According to the present invention, employed for the matrix is crystallized glass, which is equivalent to or higher than structural ceramics such as $Al_2O_3$, $ZrO_2$ or the like in mechanical strength and heat resistance. Since glass has a high impregnating ability for fibers or whiskers of ceramics, clearances between the fibers or whiskers of ceramics can be easily and completely filled up by impregnation of glass in a softened or molten state. Thus, it is possible to obtain a ceramics composite material having a high content of reinforcement, and being dense and flawless.

In general, it is considered that increase in toughness caused by compounding results from the following two effects: First, a composite material obtained by combining dissimilar materials is not uniform in strength distribution, and hence cracks are going to progress to portions which are inferior in strength, and the cracks are dispersed. Thus, a crack deflection effect is attained to improve toughness by increase in energy which is required for fracturing. Second, it is necessary to break fibers or pull out the same by the width of cracks so that cracks having a certain width progress from interfaces between the fibers and the matrix. Thus, a pull-out effect is attained to improve toughness since larger energy is required for fracturing.

According to the present invention, bond strength at interfaces between the crystallized glass, serving as the matrix, and the reinforcement is made smaller than both of material strength of the crystallized glass and material strength of the reinforcement. This is because cracks are propagated through the crystallized glass or propagated to partially break the fibers or whiskers if the bond strength at the interfaces between the crystallized glass and the reinforcement exceeds the strength levels of the aforementioned respective materials, and hence the aforementioned pull-out effect will not effectively act and fracture toughness is abruptly reduced as the result.

In general, such bond strength at the interfaces can also be adjusted by a temperature which is supplied when the original glass for crystallized glass is compounded with the fibers or whiskers of ceramics. The temperature for attaining preferable bond strength at the interfaces is varied with the types of the crystallized glass and the fibers or whiskers of ceramics.

The crystallized glass employed in the present invention is glass which is made crystalline through heat treatment, irradiation of ultraviolet rays or the like. It is preferable to employ $Li_2O$-$SiO_2$-$Al_2O_3$, $Na_2O$-$Al_2O_3$-$SiO_2$, $Na_2O$-$CaO$-$MgO$-$SiO_2$, $MgO$-$Al_2O_3$-$SiO_2$, $PbO$-$ZnO$-$B_2O_3$, $ZnO$-$B_2O_3$-$SiO_2$, $SiO_2$-$B_2O_3$-$Al_2O_3$-$MgO$-$K_2O$-$F$ or the like, which is excellent in strength and heat resistance, as such crystallized glass.

General glass has low heat resistance since its softening point is low, and its flexural strength is about 5 to 10 $kg/mm^2$, while the heat resistance is greatly improved and the strength is improved to about 30 to 60 $kg/mm^2$ by crystallization. These characteristics of the crystallized glass are sufficiently applicable as a structural material, and hence the crystallized glass is often called "glass ceramics".

Further, glass has a melting point of about 600 to 1300°C, which is lower than the sintering temperature of ceramics powder (1400 to 1700°C in the case of $Al_2O_3$, for example), and hence it causes no degradation in ceramics, serving as the reinforcement, when the same is impregnated in fibers or whiskers of ceramics (having the maximum heat-resisting temperature of 1200 to 1300°C in general) in a molten state. The crystallizing temperature of glass is further lower than its melting temperature.

Since crystallized glass has oxidizability, surfaces of fibers are so easily degraded that the same are oxidized to generate $SiO_2$, when non-oxide fibers such as SiC are employed as the reinforcement, for example. In order to prevent such degradation thereby sufficiently effectuating the characteristics of the

4

reinforcement, it is preferable to employ oxide ceramics having large oxidation resistance. More preferably employed is oxide ceramics containing at least 10 percent by weight of oxygen.

When the composite material according to the present invention is to be obtained, continuous fibers of ceramics or long fibers having fiber lengths of at least 10 cm can be introduced with no damage while maintaining the lengths thereof since mechanical mixing as hereinabove described is not particularly required. Consequently, resistance against external stress and dispersion of energy are achieved by the overall long fibers, whereby strength and fracture toughness of the composite material are further improved.

According to the present invention, the content of the reinforcement in the ceramics composite material can be easily increased to at least 50 volume percent. Particularly according to a method of impregnating the reinforcement with original glass which is in a softened or molten state under pressurization while simultaneously forcing out excess part thereof from the reinforcement, the content of the reinforcement can be easily increased to at least 70 volume percent. According to this method, further, a composite material having no voids and being dense can be further easily obtained. Thus, increase of the content of the reinforcement in the dense state directly results in improvement in mechanical strength and fracture toughness.

The aforementioned pressurization can be performed by hot pressing, pressure casting or the like, and the degree of pressurization can be appropriately set in response to the content of the reinforcement in the composite material to be obtained or the like.

In the present invention, it does not matter what states the fibers or whiskers of ceramics employed for the reinforcement are in when the same are added. They may remain in the states of fibers or whiskers, for example, or the same may be previously brought into preform modes or previously provided in the form of a sheet such as a woven fabric, at need.

According to the present invention, for compounding, basically employed is the method of impregnating the reinforcement with the original glass for crystallized glass in a softened or molten state to crystallize the original glass after compounding, as hereinabove described. On the basis of such a method, it is possible to provide a method of forming a ceramics composite material by compounding the original glass for crystallized glass and the reinforcement, forming the same into a prescribed configuration at a temperature causing viscous flow of the original glass and thereafter crystallizing the original glass. In this forming method, the original glass for crystallized glass and the reinforcement may be compounded at random or may be compounded in a laminate state. Further, the composite substance thus obtained may be that obtained by bringing the original glass into a softened or molten state and naturally impregnating the same in the reinforcement, or impregnating the same in the reinforcement under pressurization. Then, the composite substance is formed into a desired configuration by bringing the original glass into a viscous flowing state by heating the same. This forming step is generally carried out by a forming method of introducing the composite substance into a mold having a configuration corresponding to the prescribed configuration and performing hot mold pressing. In forming into a hollow configuration such as that of a cylindrical body provided with a bottom etc., a method of pressing the composite substance against the inner surface of a mold by introducing a high-pressure gas into the interior of the mold for performing forming is advantageously applied. In the case of forming the substance into a cylindrical configuration, it is advantageous to apply a method of bringing the composite substance into the form of a sheet and cylindrically rolling the sheet-type composite substance. Particularly in forming into a relatively complicated configuration such as a hollow configuration or the like, it is preferable to preform the composite substance to a configuration close to the desired configuration.

Best Mode for Carrying Out the Invention

Experimental Example

Ceramics whiskers (0.5 $\mu$m in diameter) of alumina ($Al_2O_3$) were mixed with original glass powder (2.0 $\mu$m in average particle size) for $MgO\text{-}Al_2O_3\text{-}SiO_2$ crystallized glass, and after application of a dry press, the original glass was molten/impregnated in the whiskers through a HIP process, thereby compounding the same. The content of the whiskers was adjusted to 60 volume percent by forcing out excess part of the original glass while applying the HIP process.

In the aforementioned operation, the temperature for compounding was changed within a range of 1000ºC to 1400ºC in order to vary bond strength at the interfaces of the crystallized glass and the whiskers. Then, the original glass was heated to 900ºC for crystallization, thereby producing ceramics composite materials.

5

As to the obtained ceramics composite materials, flexural strength [kg/mm$^2$] and fracture toughness values [MN•m$^{-3/2}$] by the indentation method were measured. Table 1 shows the results.

Table 1

| Compounding Temperature | Flexural Strength | Fracture Toughness Value |
|---|---|---|
| 1100 | 64 | 22.4 |
| 1200 | 75 | 18.5 |
| 1300 | 63 | 6.3 |
| 1400 | 54 | 2.3 |

With the compounding temperatures of 1100 to 1200°C, cracks after strength tests were mainly propagated through the interfaces between the crystallized glass and the ceramics whiskers, and fracture toughness exhibited extremely high values. This means that bond strength at the interfaces is lower than strength levels of the respective materials. With the compounding temperatures of 1300 to 1400°C, on the other hand, cracks were mainly propagated through the crystallized glass such that parts thereof progressed while breaking the whiskers, and fracture toughness exhibited low values. This means that bond strength at the interfaces is higher than strength levels of the respective materials.

Experimental Example 2

A woven fabric obtained through ceramics fibers (3 μm in diameter) of mullite ($3Al_2O_3•2SiO_2$) and original glass powder (3.0 μm in average particle size) for $Li_2O$-$SiO_2$-$Al_2O_3$ crystallized glass were stacked, and compounded by melting/impregnating the original glass powder in the woven fabric at 1200°C under pressurization by hot pressing. Then, the impregnated original glass was crystallized at a temperature of 800°C, to produce ceramics composite materials having matrices of the crystallized glass.

As to the ceramics composite materials having different fiber contents, flexural strength and fracture toughness values by the indentation method were measured similarly to Experimental Example 1. Table 2 shows the results of the measurement.

Table 2

| Fiber Content vol.% | Flexural Strength | Fracture Toughness Value |
|---|---|---|
| 10 | 55 | 2.5 |
| 30 | 62 | 3.0 |
| 40 | 67 | 3.5 |
| 50 | 85 | 10.5 |
| 60 | 87 | 17.4 |
| 70 | 85 | 25.6 |

The composite materials having the fiber contents of 50 to 70 volume percent exhibited particularly excellent strength values, as well as greatly improved fracture toughness values. Further, cracks after strength tests were propagated in interfaces between the crystallized glass and the ceramics fibers, to show that bond strength values at the interfaces were lower than strength levels of the respective materials.

When the compounding temperature was changed to 1300°C or more from 1200°C in the above Experimental Example, fracture toughness values were abruptly lowered to exhibit values of 5.3 with a fiber content of 50 volume percent, 4.8 with 60 volume percent and 5.2 with 70 volume percent. Cracks of these composite materials were mainly propagated through the crystallized glass, and parts thereof progressed while breaking the ceramics fibers.

Experimental Example 3

A woven fabric formed of continuous fibers of $Al_2O_3$ having diameters of 5 μm and tensile strength of 200 kg/mm$^2$, and a mat-type compact formed of short fibers of $Al_2O_3$ having lengths of 0.5 to 2.0 cm were employed as the reinforcements respectively, and subjected to heat treatment in the atmospheric air at

1200ºC for three hours with original glass powder (not more than 100 meshes in particle size) for MgO-$Al_2O_3$-$SiO_2$ crystallized glass containing $TiO_2$, $ZrO_2$ and $SnO_2$, thereby melting the original glass powder and impregnating the same in the reinforcements. Thereafter the original glass was crystallized at 1100ºC, to precipitate crystalline phases mainly formed of cordierite phases. As to the obtained composite materials, flexural strength and fracture toughness values were measured similarly to Experimental Example 1. Table 3 shows the results of the measurement.

Table 3

| Reinforcement | Crystallization | Flexural Strength | Fracture Toughness |
|---|---|---|---|
| Woven Fabric of Continuous Fiber | no | 20 | 9 |
| " | yes | 110 | 18 |
| Short-Fiber Mat | yes | 45 | 8 |

From the results shown in Table 3, it is understood that strength and fracture toughness are greatly improved by crystallizing the glass forming the matrices, and that the matrices of the same crystallized glass are made superior in strength and fracture toughness when the fibers contained therein are continuous fibers.

Experimental Example 4

Original glass powder (not more than 200 meshes in particle size) for $Li_2O$-$SiO_2$-$Al_2O_3$ crystallized glass was mixed with water to prepare a slurry, and tapes obtained by unidirectionally shaping continuous fibers of $ZrO_2$ were successively dipped therein and then extracted, while these tapes were further stacked and dried. At this time, the fiber content was adjusted to 50 volume percent.

Thereafter the dried laminate was heated to 1400ºC in the atmospheric air to melt/impregnate the glass in the fibers for compounding, and crystallization processing was performed at 900ºC.

The composite material thus obtained exhibited respective values of 110 kg/mm$^2$ in flexural strength and 19.5 MN•m$^{-3/2}$ in fracture toughness.

Experimental Example 5

Woven fabrics formed of continuous fibers of SiC, $Si_3N_4$ and $SiO_2$ respectively were employed as the reinforcements, and subjected to heat treatment in the atmospheric air at 1150ºC for three hours with original glass powder (not more than 100 meshes in particle size) for MgO-$Al_2O_3$-$SiO_2$ crystallized glass containing $TiO_2$, $ZrO_2$ and $SnO_2$, thereby melting the original powder and compounding the same with the reinforcements. Thereafter the glass was crystallized at 900ºC, to obtain composite materials. As to the respective composite materials thus obtained, strength and fracture toughness values were measured by the same processes as those of Experimental Example 1. Table 4 shows the results of the measurement.

Table 4

| Reinforcement Fiber | Flexural strength | Fracture Toughness Value |
|---|---|---|
| SiC | 5 | 2.5 |
| $Si_3N_4$ | 3 | 3.0 |
| $SiO_2$ | 60 | 13.0 |

In the composite materials employing SiC and $Si_3N_4$, which are non-oxide ceramics, as the fibers for the reinforcements, the fibers were degraded by crystallization of the glass, and strength and fracture toughness values thereof exhibited extremely low values. On the other hand, no degradation of the fibers as described above was recognized in the composite material employing the fibers of $SiO_2$, which is oxide ceramics, as the reinforcement, while the same exhibited high values in strength and fracture toughness.

Experimental Example 6

30 layers of woven fabrics (plain weave) of ceramics fibers mainly composed of $Al_2O_3$ and having diameters of 2 to 3 $\mu$m and tensile strength of 200 kg/mm$^2$, and 30 layers of original glass powder (10.5 $\mu$m in average particle size) for $MgO$-$Al_2O_3$-$SiO_2$ crystallized glass containing $TiO_2$ and $ZrO_2$ were alternately stacked. The volume of voids observed when 30 layers of the woven fabrics employed herein were stacked and pressurized with pressure of 15 kg/cm$^2$ was 85 cm$^3$, while the actual volume of the employed original glass powder was 655 cm$^3$.

The laminate obtained in the aforementioned manner was preheated in a hot press at 1200°C for one hour and thereafter pressurized in a direction orthogonal to the woven fabrics with pressure of 15 kg/cm$^2$, and such pressurization was continued for 1.5 hours until no excess original glass was discharged from an exhaust port provided in a lower part of the mold. The complex thus obtained was cooled and thereafter the original glass was crystallized at 1000°C, to produce a ceramics composite material having the matrix of the crystallized glass.

The obtained ceramics composite material had a fiber content of 75 volume percent, flexural strength of 85 kg/mm$^2$ and a fracture toughness value of 23.5 MN•m$^{-3/2}$.

Experimental Example 7

50 layers of prepreg sheets of ceramics fibers mainly composed of $SiO_2$ and having diameters of 3 $\mu$m and tensile strength of 150 kg/mm$^2$, and 50 layers of original glass powder (5.0 $\mu$m in average particle size) for $Li_2O$-$Al_2O_3$-$SiO_2$ crystallized glass were alternately stacked. The volume of voids observed when 50 layers of the prepreg sheets employed herein were pressurized with pressure of 30 kg/cm$^2$ was 150 cm$^3$, while the actual volume of the original glass powder employed herein was 750 cm$^3$.

The laminate thus obtained was preheated in a HIP apparatus at 1200°C for one hour, and thereafter pressurized with argon gas under pressure of 2000 kg/cm$^2$. Excess part of the original glass was forced out in the outer peripheral portion of the composite thus obtained. The entire composite was cooled and thereafter the forced-out part of the original glass was removed, while the original glass was crystallized at 800°C to produce a ceramics composite material having the matrix of the crystallized glass.

The obtained ceramics composite material had a fiber content of 85 volume percent flexural strength of 95 kg/mm$^2$ and a fracture toughness value of 24.7 MN•m$^{-3/2}$.

Reference Example 8

Original glass powder (1.5 $\mu$m in average particle size) for $LiO_2$-$Al_2O_3$-$SiO_2$ crystallized glass was heated/impregnated in a mat-type woven fabric of alumina fibers (3.0 $\mu$m in average diameter) mainly composed of $Al_2O_3$ and compounded with the same. A sheet-type preform of this composite was introduced into a mold of inconel and heated to 1100°C for hot press forming. The time required for the forming was 10 minutes for preheating and 15 seconds for hot pressing, while this is an extremely short time as compared with sintering of ceramics powder. The compact was formed just along the configuration of the mold by viscous flow, with no defects such as cracks.

Then, this compact was crystallized at 800°C for 60 minutes, to obtain a ceramics composite material having the matrix of the crystallized glass. The obtained ceramics composite material had flexural strength of 30 kg/mm$^2$ and a fracture toughness value of 15 MN•m$^{-3/2}$ with a dimensional error of not more than ±0.5 %, while its surface state was smooth and required no specific surface finish working.

Reference Example 9

Three layers of mat-type woven fabrics of mullite fibers (2.0 $\mu$m in average particle size) mainly composed of mullite, and three layers of original glass (1.5 $\mu$m in average particle size) for $LiO_2$-$Al_2O_3$-$SiO_2$ crystallized glass were alternately stacked. A sheet-type preform of 100 mm in width formed of this laminate was heated to 1200°C, and rolled from an end with application of tensile force, to obtain a pipe-type body of 30 mm in diameter and 4 mm in thickness. The time required for forming was five minutes including preheating, while no defects were caused by the forming.

Thereafter this body was crystallized at 850°C for 35 minutes, to obtain a ceramics composite material having the matrix of the crystallized glass. This ceramics composite material had flexural strength of 45 kg/mm$^2$ and a fracture toughness value of 14 MN•m$^{-3/2}$.

Reference Example 10

A mat-type woven fabric of alumina fibers (3.0 $\mu$m in average diameter) mainly composed of $Al_2O_3$ was previously preformed into a configuration close to the configuration of a hollow bottle such as a beer bottle, and original glass powder (5.0 $\mu$m in average particle size) for $LiO_2$-$Al_2O_3$-$SiO_2$ crystallized glass was heated/impregnated therein for compounding. A preform of this composite, being in the configuration of a hollow bottle, was introduced into a mold of stainless steel having a corresponding configuration of a hollow bottle and heated to 1000ºC, to introduce a high-pressure gas into its interior. The softened preform was pressed against the inner surface of the mold by the high-pressure gas of 100 kg/mm² in pressure, and formed into a bottle by viscous flow. The time required for forming was 10 minutes including preheating, while no defects were caused by the forming.

Thereafter this compact was crystallized at 900ºC for 15 minutes, to obtain a ceramics composite material having the matrix of the crystallized glass. This ceramics composite material had flexural strength of 40 kg/mm² and fracture toughness of 16 MN•m$^{-3/2}$, and exhibited no creep deformation up to 1000ºC.

When the preform of the composite was not preformed to a configuration close to the final configuration, stacking of the preform was easily caused at corner portions in forming thereafter performed, to frequently cause defectives.

Industrial Applicability

The composite material according to the present invention is suitable for employment as a heat-resistant structural material, such as a material for a ceramics engine, practical application of which has not been much developed in general.

**Claims**

1. A ceramics composite material comprising:
   a matrix of crystallized glass the composition of which crystallized glass is one selected from a group of $Li_2O$-$SiO_2$-$Al_2O_3$, $Na_2O$-$Al_2O_3$-$SiO_2$, $Na_2O$-$CaO$-$MgO$-$SiO_2$, $MgO$-$Al_2O_3$-$SiO_2$, $PbO$-$ZnO$-$B_2O_3$, $ZnO$-$B_2O_3$-$SiO_2$, and
   $SiO_2$-$B_2O_3$-$Al_2O_3$-$MgO$-$K_2O$-$F$; and
   a reinforcement of fibers of ceramics contained in said matrix, wherein the ceramics forming said reinforcement consists of oxide ceramics and the content of said reinforcement is at least 50 volume percent and wherein said reinforcement contains continuous fibers or long fibers having a fiber length of at least 10 cm, and
   the bond strength at interfaces between said crystallized glass and said reinforcement is less than the material strength of said crystallized glass and less than the material strength of said reinforcement, and wherein
   the flexural strength of said composite exceeds 55 kg/mm².

2. A method of producing a ceramics composite material of claim 1, comprising the steps of:
   making ceramics fibers coexist with original glass for crystallized glass having actual volume larger than the volume of voids remaining between said fibers in compression of said ceramics fibers with predetermined pressure;
   making pressurization at a temperature exceeding the softening temperature of said original glass and not more than the softening temperature of said fibers with said predetermined pressure thereby charging original glass, being in a softened state, between ceramics fibers and simultaneously forcing out excess part of original glass from fibers; and
   then crystallizing original glass charged between said ceramics fibers.

3. A method in accordance with claim 2, wherein the content of ceramics fibers charged with said original glass is made at least 70 volume percent in said step of making pressurization.

4. A method of forming a ceramics composite material of claim 1, comprising the steps of:
   compounding original glass for crystallized glass with a reinforcement of fibers of ceramics, wherein said original glass and said reinforcement are compounded in a laminate state in said compounding step;
   forming said composite substance, being compounded, into a desired configuration at a temperature causing viscous flow of said original glass;
then crystallizing said original glass.

5. A method according to claim 4, wherein a forming method by a hot type press is applied in said forming step.

6. A method according to claim 4, wherin a method of introducing said composite substance into the interior of a mold, and pressing said composite substance by a high-pressure gas against said mold for forming the same is applied in said forming step.

7. A method according to claim 4, wherein said forming step includes the steps of bringing said composite substance into the form of a sheet-type composite substance.

8. A method of forming a ceramics composite material of claim 1, comprising the steps of:
compounding original glass for crystallized glass with a reinforcement of fibers of ceramics; forming said composite substance into a configuration close to said desired configuration in advance of a forming step; forming said composite substance, being compounded, into a desired configuration at a temperature causing viscous flow of said original glass; and then crystallizing said original glass.

**Patentansprüche**

1. Keramisches Kompositmaterial, umfassend:
eine Matrix aus kristallisiertem Glas, wobei die Zusammensetzung des kristallisierten Glases gewählt ist aus einer Gruppe von $Li_2O$-$SiO_2$-$Al_2O_3$, $Na_2O$-$Al_2O_3$-$SiO_2$, $Na_2O$-$CaO$-$MgO$-$SiO_2$, $MgO$-$Al_2O_3$-$SiO_2$, $PbO$-$ZnO$-$B_2O_3$, $ZnO$-$B_2O_3$-$SiO_2$, und $SiO_2$-$B_2O_3$-$Al_2O_3$-$MgO$-$K_2O$-$F$; und
eine Verstärkung aus Fasern von Keramiken, welche in der Matrix enthalten sind, wobei die Keramiken, die die Verstärkung bilden, Oxidkeramiken umfassen und der Anteil der Verstärkung mindestens 50 % Volumenprozent beträgt und wobei die Verstärkung kontinuierliche Fasern oder lange Fasern enthält, die eine Faserlänge von mindestens 10 cm aufweisen, und wobei
die Bindungsstärke an den Zwischenflächen zwischen dem kristallisierten Glas und der Verstärkung kleiner als die Materialstärke des kristallisierten Glases und kleiner als die Materialstärke der Verstärkung ist, und wobei die Biegestärke des Kompositmaterials 55 kg/mm$^2$ übersteigt.

2. Verfahren zur Herstellung von keramischem Kompositmaterial nach Anspruch 1, umfassend die Schritte:
Veranlassen, daß Keramikfasern mit dem ursprünglichen Glas koexistieren, so daß das kristallisierte Glas ein tatsächliches Volumen größer als das Volumen der Leerräume aufweist, die zwischen den komprimierten Fasern der Keramikfasern mit vorbestimmtem Druck bestehen,
Pressung bei einer Temperatur größer als die Erweichungstemperatur des ursprünglichen Glases und nicht größer als die Erweichungstemperatur der Fasern mit einem vorbestimmten Druck, wodurch das ursprüngliche Glas, das in einem erweichten Zustand vorliegt, zwischen die Keramikfaser gebracht wird und gleichzeitig überschüssige Teile des ursprünglichen Glases aus den Fasern herausgepreßt werden, und
danach Kristallisieren des ursprünglichen Glases, das zwischen den Keramikfasern eingebracht ist.

3. Verfahren nach Anspruch 2, worin der Anteil der Keramikfasern, die mit dem ursprünglichen Glas durchsetzt werden, mindestens 70 Volumenprozent in dem Schritt der Pressung ausmacht.

4. Verfahren zum Formen eines keramischen Kompositmaterials nach Anspruch 1, umfassend die Schritte:
Zusammensetzen des ursprünglichen Glases für kristallisiertes Glas mit einer Verstärkung aus Keramikfasern, wobei das ursprüngliche Glas und die Verstärkung in einem laminierten Zustand in dem Zusammensetzungsschritt zusammengefügt werden;
Formen der Kompositsubstanz, die zusammengefügt wurde, in eine gewünschte Konfiguration bei einer Temperatur, welche einen viskosen Fluß des ursprünglichen Glases verursacht,
danach Kristallisieren des ursprünglichen Glases.

5. Verfahren nach Anspruch 4, worin ein Formverfahren durch Heißpressen in dem Formschritt angewendet wird.

6. Verfahren nach Anspruch 4, worin ein Verfahren zur Enführung der Kompositsubstanz in das Innere einer Form und Fressen der Kompositsubstanz durch ein Hochdruckgas gegen die Form zum Formen desselben in dem Formschritt angewendet wird.

7. Verfahren nach Anspruch 4, worin der Formschritt die Schritte des Bringens der Kompositsubstanz in eine Form in einer blattartigen Kompositsubstanz umfaßt.

8. Verfahren zur Herstellung von keramischem Kompositmaterial nach Anspruch 1, umfassend die Schritte:
Zusammensetzen von ursprünglichen Glas für kristallisiertes Glas mit einer Verstärkung aus Keramikfasern;
Formen der Kompositsubstanz in eine Konfiguration nahe zu der gewünschten Konfiguration vor dem Formschritt Formen der Kompositsubstanz, die zusammengesetzt wurde, in eine gewünschte Konfiguration bei einer Temperatur, welche einen viskosen Fluß des ursprünglichen Glases verursacht,
danach Kristallisieren des ursprünglichen Glases.

**Revendications**

1. Matériau céramique composite comprenant :
une matrice de verre cristallisé, la composition de ce verre cristallisé étant une composition choisie dans un groupe de $Li_2O-SiO_2-Al_2O_3$, $Na_2O-Al_2O_3-SiO_2$, $Na_2O-CaO-MgO-SiO_2$, $MgO-Al_2O_3-SiO_2$, $PbO-ZnO-B_2O_3$, $ZnO-B_2O_3-SiO_2$ et $SiO_2-B_2O_3-Al_2O_3-MgO-K_2O-F$ ; et
un renfort de fibres de céramique contenu dans ladite matrice, où la céramique formant ledit renfort est constituée de céramique à base d'oxyde, et la teneur dudit renfort est d'au moins 50 % en volume, et où ledit renfort contient des fibres continues ou des fibres longues ayant une longueur de fibre d'au moins 10 cm, et la force de liaison aux interfaces entre ledit verre cristallisé et ledit renfort est inférieure à la résistance du matériau dudit verre cristallisé et inférieure à la résistance du matériau dudit renfort, et où la résistance à la flexion dudit composite dépasse 55 kg/mm$^2$.

2. Procédé de fabrication d'un matériau céramique composite selon la revendication 1, comprenant les étapes consistant à :
faire coexister des fibres céramiques avec le verre d'origine pour le verre cristallisé, ayant un volume effectif plus grand que le volume des vides restant entre lesdites fibres lors de la compression desdites fibres céramiques avec une pression prédéterminée ;
mettre sous une pression à une température dépassant la température de ramollissement dudit verre d'origine et non supérieure à la température de ramollissement desdites fibres avec ladite pression prédéterminée, chargeant ainsi le verre d'origine, étant dans un état ramolli, entre les fibres céramiques et forçant simultanément la partie en excès du verre d'origine à sortir des fibres ; et
puis à cristalliser le verre d'origine chargé entre lesdites fibres céramiques.

3. Procédé selon la revendication 2, dans lequel la teneur en libres céramiques chargées avec ledit verre d'origine est portée à au moins 70 % en volume dans ladite étape de mise sous pression.

4. Procédé de formation d'un matériau céramique composite selon la revendication 1, comprenant les étapes de :
combinaison du verre d'origine pour le verre cristallisé avec un renfort de fibres de céramique, dans laquelle ledit verre d'origine et ledit renfort sont combinés dans un état laminé dans ladite étape de combinaison ;
formation de ladite substance composite, étant combinée, en une configuration désirée, à une température provoquant l'écoulement visqueux dudit verre d'origine ;
puis de cristallisation dudit verre d'origine.

5. Procédé selon la revendication 4, dans lequel un procédé de formation par une presse de type chaude est appliqué dans ladite étape de formation.

**6.** Procédé selon la revendication 4, dans lequel un procédé d'introduction de ladite substance composite dans l'intérieur d'un moule et de pression de ladite substance composite par un gaz haute pression contre ledit moule pour former celle-ci est appliqué dans ladite étape de formation.

**7.** Procédé selon la revendication 4, dans lequel ladite étape de formation inclut l'étape de mise de ladite substance composite sous la forme d'une substance composite en forme de feuille.

**8.** Procédé de formation d'un matériau céramique composite selon la revendication 1, comprenant les étapes de :
combinaison du verre d'origine pour le verre cristallisé avec un renfort de fibres de céramique ;
formation de ladite substance composite dans une configuration proche de ladite configuration désirée avant l'étape de formation ;
formation de ladite substance composite, étant combinée, en une configuration désirée, à une température provoquant l'écoulement visqueux dudit verre d'origine ;
puis de cristallisation dudit verre d'origine.